# EUROPÄISCHE PATENTANMELDUNG

(11) **EP 1 666 304 A2**
(43) Veröffentlichungstag der Anmeldung: **07.06.2006**
(21) Anmeldenummer: 05111602.8
(22) Anmeldetag: 02.12.2005
(51) Int. Cl.: B60Q 1/06, B60Q 1/12, B60Q 1/30

(54) **Scheinwerfer für Fahrzeuge**

(30) Priorität: 03.12.2004 DE 102004058269
(71) Anmelder: Hella KGaA Hueck & Co., 59552 Lippstadt (DE)
(72) Erfinder: Lachmayer, Roland, 59581 Warstein (DE); Korff, Detlef, 59557 Lippstadt (DE)

(57) **Zusammenfassung**

Die Erfindung betrifft einen Scheinwerfer für Fahrzeuge mit einer in einem Gehäuse angeordneten ersten Leuchteinheit zur Erzeugung einer ersten Lichtfunktion und mit einer in dem Gehäuse angeordneten zweiten Leuchteinheit zur Erzeugung einer zweiten Lichtfunktion einerseits sowie zur Erzeugung einer Kurvenlichtfunktion andererseits, wobei die erste Leuchteinheit und die zweite Leuchteinheit an einem gemeinsamen Tragteil (10,34) gehaltert sind, wobei das Tragteil (10,34) drehfest mit dem Gehäuse verbunden ist und dass die erste Leuchteinheit (2,31) und die zweite Leuchteinheit (3,32) mittels einer gemeinsamen Antriebseinheit (13) um eine vertikale Verschwenkachse (12,12') verschwenkbar sind zur Erzeugung jeweils eines Kurvenlichtbündels.

## Beschreibung

Die Erfindung betrifft einen Scheinwerfer für Fahrzeuge mit einer in einem Gehäuse angeordneten ersten Leuchteinheit zur Erzeugung einer ersten Lichtfunktion und mit einer in dem Gehäuse angeordneten zweiten Leuchteinheit zur Erzeugung einer zweiten Lichtfunktion einerseits sowie zur Erzeugung einer Kurvenlichtfunktion andererseits, wobei die erste Leuchteinheit und die zweite Leuchteinheit an einem gemeinsamen Tragteil gehaltert sind.

Aus der EP 09 93 987 A1 ist ein Scheinwerfer für Fahrzeuge mit einer ersten Leuchteinheit zur Erzeugung einer ersten Lichtfunktion und mit einer zweiten Leuchteinheit zur Erzeugung einer zweiten Lichtfunktion bekannt. Die beiden Leuchteinheiten sind an einem gemeinsamen Tragteil befestigt, das um eine horizontale und vertikale Achse in Bezug auf ein Gehäuse des Scheinwerfers verschwenkbar ist. Die Verschwenkung der beiden Leuchteinheiten dient zur Grundeinstellung derselben.

Aus der DE 198 02 023 A1 ist ein Scheinwerfer für Fahrzeuge mit einer ersten Leuchteinheit zur Erzeugung einer ersten Lichtfunktion und mit einer zweiten Leuchteinheit zur Erzeugung einer zweiten Lichtfunktion bekannt. Die beiden Leuchteinheiten sind an einem gemeinsamen Tragteil gehaltert, dass schwenkbar gegenüber einem Gehäuse des Scheinwerfers gelagert ist, so dass eine Grundeinstellung der Leuchteinheiten ermöglicht wird. Zusätzlich ist die zweite Leuchteinheit zur Erzeugung einer Kurvenlichtfunktion um eine vertikale Achse gegenüber dem Tragteil gelagert. Nachteilig an dem bekannten Scheinwerfer ist, dass durch die Verschwenkbarkeit lediglich einer einzigen Leuchteinheit die Ausleuchtung während einer Kurvenfahrt des Fahrzeugs begrenzt ist.

Aufgabe der vorliegenden Erfindung ist es, einen Scheinwerfer für Fahrzeuge derart weiterzubilden, dass bei einem relativ geringen Bauraumbedarf unter Gewichts- und Kosteneinsparungen eine verbesserte Ausleuchtung in einer Kurvenfahrt des Fahrzeugs gewährleistet ist.

Zur Lösung dieser Aufgabe ist die Erfindung in Verbindung mit dem Oberbegriff des Patentanspruchs 1 dadurch gekennzeichnet, dass das Tragteil drehfest mit dem Gehäuse verbunden ist und dass die erste Leuchteinheit und die zweite Leuchteinheit mittels einer gemeinsamen elektromagnetischen Antriebseinheit um eine vertikale Verschwenkachse verschwenkbar sind zur Erzeugung jeweils eines Kurvenlichtbündels.

Der besondere Vorteil der Erfindung besteht darin, dass durch die gekoppelte Verstellung einer ersten Lichteinheit und einer zweiten Lichteinheit während einer Kurvenfahrt eine Kurvenlichtfunktion erzeugbar ist, die eine verbesserte Ausleuchtung des Straßenverlaufs ermöglicht. Grundgedanke der Erfindung ist es, eine gekoppelte Verstellung von mindestens zwei Leuchteinheiten bereitzustellen, so dass eine zweite Leuchteinheit in Abhängigkeit von der Bewegung einer ersten Leuchteinheit verschwenkt wird. Darüber hinaus kann durch das Vorsehen lediglich einer elektromagnetischen Antriebseinheit die verbesserte Ausleuchtung in der Kurvenfahrt des Fahrzeugs kostengünstiger gestaltet werden.

Nach einer bevorzugten Ausführungsform der Erfindung sind die erste Leuchteinheit und die zweite Leuchteinheit vorzugsweise als Reflexionssysteme (Reflexionsmodule) ausgebildet, die im Wesentlichen eine Lichtquelle sowie einen derselben zugeordneten Reflektor aufweisen. Im Gegensatz zu Projektionssystemen, die neben der Lichtquelle über einen elliptischen Reflektor, eine Blende sowie eine Linse verfügen, kann die Bautiefe des Scheinwerfers wesentlich reduziert werden. Über die Geometrie der Reflektoren lässt sich eine gewünschte Lichtverteilung erzeugen, wobei durch Kombination der Lichtverteilungen der ersten Leuchteinheit und der zweiten Leuchteinheit infolge verbesserter Ausleuchtung des Straßenverlaufs die Sicherheit des Fahrzeugführers bei Nachtfahrt wesentlich erhöht wird. Darüber hinaus lässt sich hierdurch eine homogenere Lichtverteilung erzeugen, die den Sichtkomfort während der Kurvenfahrt erhöht.

Nach einer Weiterbildung der Erfindung ist die erste Leuchteinheit derart aufgebaut, dass dieselbe ein Nahlichtbündel abstrahlt, und die zweite Leuchteinheit derart aufgebaut, dass dieselbe ein Fernlichtbündel abstrahlt. Vorteilhaft wird hierdurch der Lichtstrahl in der Kurve mittig verlängert, was eine bessere Ausleuchtung in der Kurvenfahrt bedeutet.

Nach einer Weiterbildung der Erfindung ist die zweite Leuchteinheit in Richtung der Fahrzeuglängsachse derart versetzt zu der ersten Leuchteinheit angeordnet, dass die zweite Leuchteinheit verzögert zu der ersten Leuchteinheit verschwenkt wird. Hierdurch ist eine Nachführung der zweiten Leuchteinheit gegenüber der ersten Leuchteinheit möglich, bei der die zweite Leuchteinheit langsamer verstellt wird als die erste Leuchteinheit.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine perspektivische Rückansicht einer ersten Leuchteinheit und einer zweiten Leuchteinheit nach einer ersten Ausführungsform,
- Figur 2: eine schematische Draufsicht auf einen Scheinwerfer mit der ersten Leuchteinheit und der zweiten Leuchteinheit gemäß Figur 1 in einer Geradeausfahrtlichtstellung derselben,
- Figur 3: eine schematische Draufsicht auf den Scheinwerfer mit der ersten Leuchteinheit und der zweiten Leuchteinheit gemäß Figur 1 in einer Kurvenlichtstellung derselben,
- Figur 4: eine perspektivische Unteransicht einer ersten Leuchteinheit und einer zweiten Leuchteinheit nach einer zweiten Ausführungsform, bei der die Leuchteinheiten in vertikaler Richtung und in Fahrzeuglängsrichtung versetzt zueinander angeordnet sind,
- Figur 5: eine Unteransicht der ersten Leuchteinheit und zweiten Leuchteinheit gemäß Figur 4,
- Figur 6a: eine Lichtverteilung des Scheinwerfers im Straßenraum in der Geradeausfahrtstellung der ersten und zweiten Leuchteinheit und
- Figur 6b: eine Lichtverteilung des Scheinwerfers im Straßenraum in einer Rechtskurvenlichtstellung der ersten und zweiten Leuchteinheit.

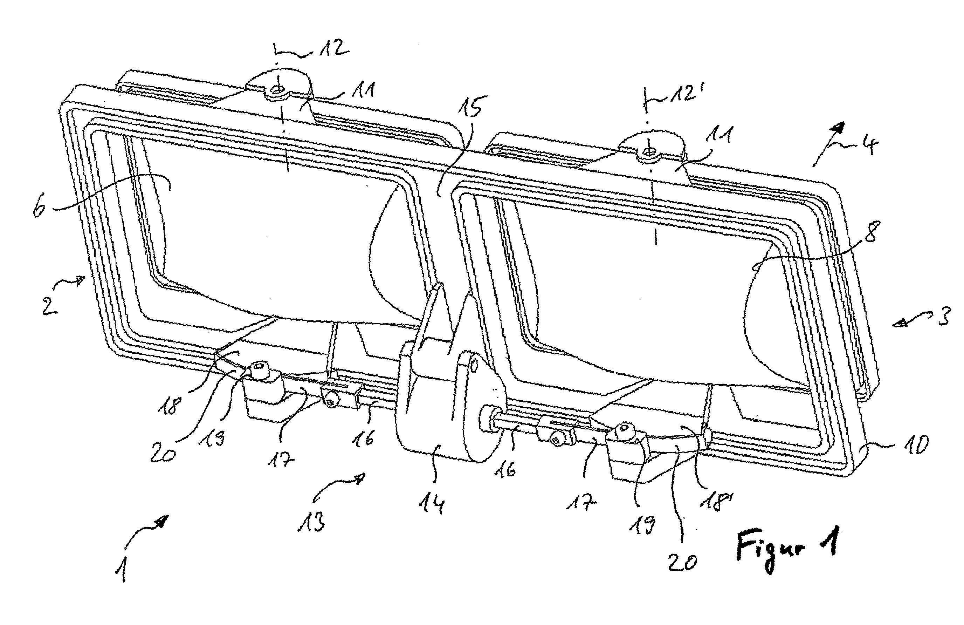

Nach einer ersten Ausführungsform eines Scheinwerfers 1 gemäß den Figuren 1 bis 3 sind eine erste Leuchteinheit 2 zur Erzeugung eines Nahlichtbündels (Abblendlichtfunktion) und eine zweite Leuchteinheit 3 zur Erzeugung eines Fernlichtbündels (Fernlichtfunktion) nebeneinander in einer horizontalen Ebene angeordnet, die senkrecht zur Fahrzeuglängsachse bzw. zur Lichtaustrittsrichtung 4 angeordnet ist. Die erste Leuchteinheit 2 besteht im Wesentlichen aus einer ersten Lichtquelle 5 sowie einem derselben zugeordneten ersten Reflektor 6. Die zweite Leuchteinheit 3 besteht im Wesentlichen aus einer zweiten Lichtquelle 7 sowie einem derselben zugeordneten zweiten Reflektor 8. In Lichtaustrittsrichtung 4 vor den Leuchteinheiten 2, 3 ist eine glasklare Abschlussscheibe 9 angeordnet, die eine vordere Öffnung eines nicht dargestellten Gehäuses des Scheinwerfers 1 sowie die Leuchteinheiten 2 und 3 abdeckt.

Die erste Leuchteinheit 2 und die zweite Leuchteinheit 3 sind an einem gemeinsamen Tragteil 10 gehaltert, das als Halterahmen mit zwei den Leuchteinheiten 2, 3 zugeordneten Öffnungen ausgebildet ist, in denen der erste Reflektor 6 und der zweite Reflektor 8 bereichsweise von hinten und vorzugsweise von vorne eintauchen. An einer Oberseite des Halterahmens 10 sind jeweils mittig im Halterahmen 10 angeordnete bzw. vorzugsweise abragende Haltenasen 11 vorgesehen, an die der erste Reflektor 6 bzw. der zweite Reflektor 8 um eine vertikale Verschwenkachse 12, 12' drehbar gelagert sind.

Zur Verstellung der ersten Leuchteinheit 2 und der zweiten Leuchteinheit 3 um die vertikalen Verschwenkachsen 12 bzw. 12' ist eine elektromagnetische Antriebseinheit 13 vorgesehen, die in einem unteren Bereich des Tragteils 10 hinter, über oder unter demselben angeordnet ist. Die Antriebseinheit 13 umfasst ein Antriebselement 14, das als ein Schrittmotor ausgebildet ist und rechts oder links, vorzugsweise mittig an einer vertikalen Zentralstrebe 15 des Tragteils 10 befestigt ist. Quer zur Lichtaustrittsrichtung 4 und in Richtung der gegenüberliegenden Stirnseiten des Tragteils 10 ragt von dem Schrittmotor 14 als Übertragungselement eine Stößelstange 16 ab, die mittels einer als Wirkelement dienenden einer Blattfeder 17 mit einem rückseitigen Fortsatz 18, 18' des ersten Reflektors 6 und des zweiten Reflektors 8 fest verbunden sind. Zu diesem Zweck ist die Blattfeder 17 um ein Festlegelement 19 umgelegt und klemmend mit einem bogenförmigen Abschnitt 20 des Fortsatzes 18, 18' verbunden.

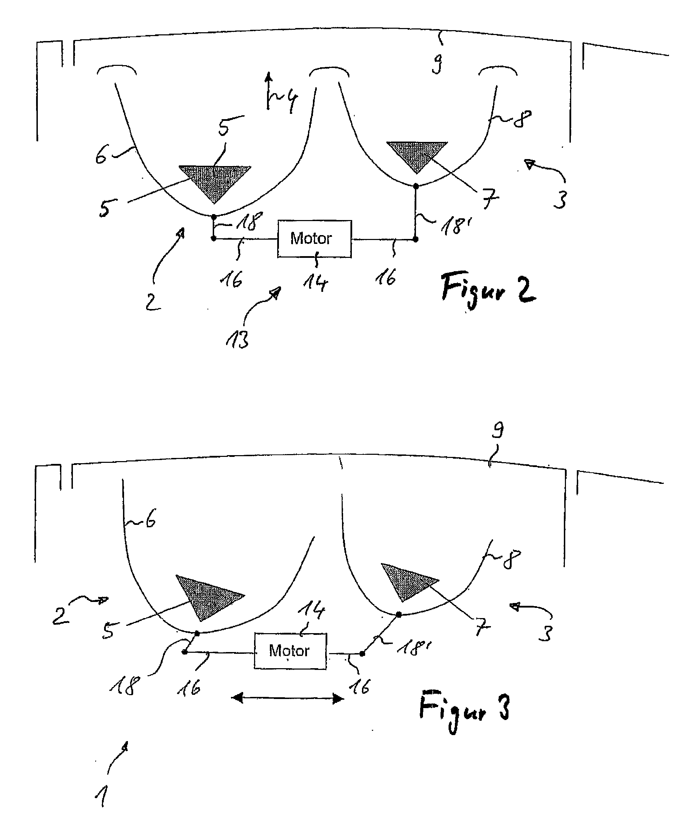

Wie besser aus den Figuren 2 und 3 zu ersehen ist, wird ein Viergelenk gebildet, wobei die Stößelstange 16 bei einer Geradeausfahrtstellung der ersten Leuchteinheit 2 und der zweiten Leuchteinheit 3 gemäß Figur 2 rechts, links oder vorzugsweise mittig positioniert ist.

Bei einer Rechtskurvenfahrt gemäß Figur 3 wird der Schrittmotor 14 beispielsweise in Abhängigkeit von der Richtung der Vorderräder des Fahrzeugs derart betätigt, dass die Stößelstange 16 in Fahrtrichtung gesehen links aus der Mittelstellung gemäß Figur 2 bewegt wird. Hierdurch wird die erste Leuchteinheit 2 (erste Lichtquelle 5, erster Reflektor 6) sowie die zweite Leuchteinheit 3 (zweite Lichtquelle 7, zweite Reflektor 8) um die vertikalen Verschwenkachsen 12, 12' nach rechts verschwenkt, so dass sie in entsprechende Kurvenlichtstellung verbracht sind.

Wie aus Figur 3 ersichtlich ist, erfolgt eine Differenzierung der Verstellgeschwindigkeit der zu verschwenkenden Leuchteeinheiten 2, 3 über die Bewegungsgesetze eines Getriebes und deren konstruktiven Abwandlung. Hierzu ist der Fortsatz 18' des zweiten Reflektors 8 länger ausgebildet als der Fortsatz 18 des ersten Reflektors 6, so dass die zweite Leuchteinheit 3 gegenüber der ersten Leuchteinheit 2 langsamer in der Kurvenlichtfunktion verstellt und derselben nachgeführt wird.

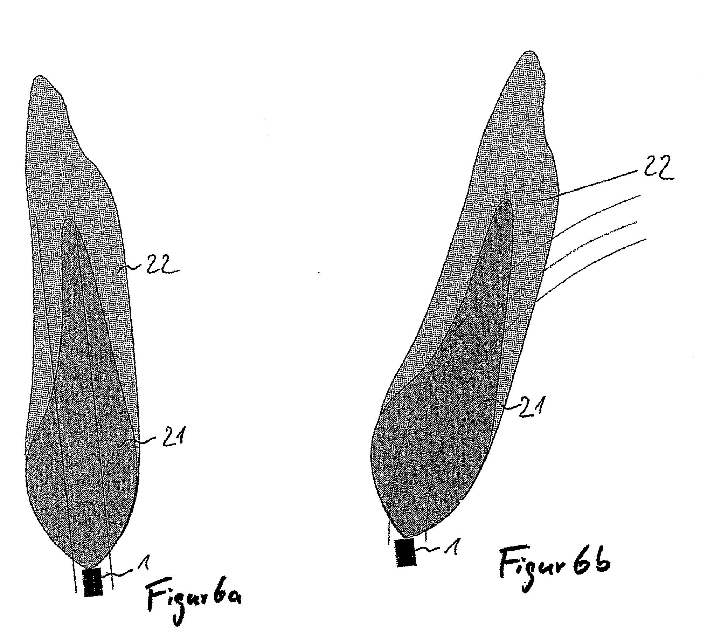

Wie aus den Figuren 6a und 6b ersichtlich ist, kann durch die kombinierte Nutzung eines durch die erste Leuchteinheit 2 erzeugten Abblendlichtbündels 21 sowie eines durch die zweite Leuchteinheit 3 erzeugten Fernlichtbündels 22 eine verbesserte Ausleuchtung bei der Kurvenfahrt erzeugt werden. Die Lichtquellen 5, 7 sind vorzugsweise als Halogenlampen ausgebildet. Alternativ kann die erste Lichtquelle 5 auch als eine Gasentladungslampe ausgebildet sein, die entweder nur ein Abblendlichtbündel 21 oder ein Abblendlichtbündel 21 und ein Fernlichtbündel 22 erzeugt. Im letzten Fall kann die Gasentladungslampe mit einer zusätzlichen Halogenlampe als zweite Lichtquelle 7 kombiniert werden, die insbesondere bei scharfen Kurvenfahrten, wie beispielsweise im Kreuzungsbereich, zuschaltbar ist.

Alternativ kann die erste Leuchteinheit 2 auch als Projektionsmodul zur Erzeugung eines Abblendlicht- und Fernlichtbündels einerseits und die zweite Leuchteinheit 3 als Reflexionsmodul zur Erzeugung eines Fernlichtbündels andererseits ausgebildet sein.

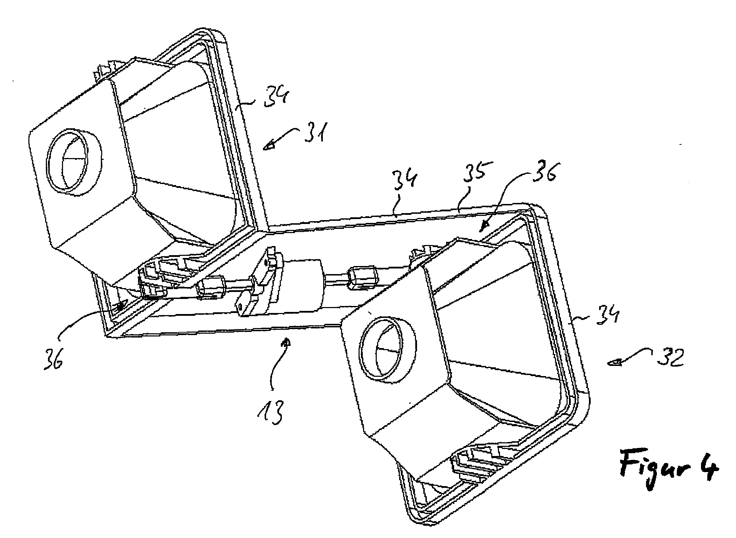

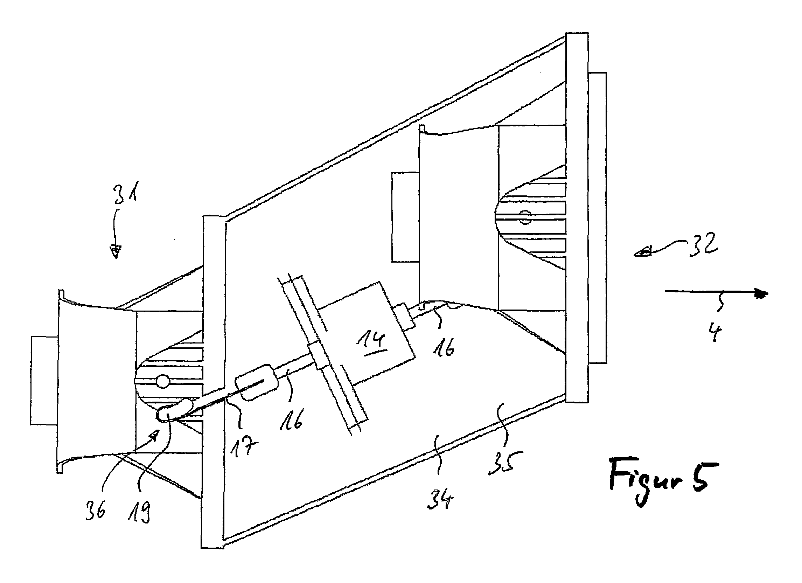

Nach einer zweiten Ausführungsform eines Scheinwerfers 30 gemäß den Figuren 4 und 5 können eine erste Leuchteinheit 31 und eine zweite Leuchteinheit 32 auch in vertikaler Richtung und in Fahrzeugslängsrichtung 33 versetzt zueinander angeordnet sein. In diesem Fall ist ein in vertikaler Richtung geformtes Tragteil 34 (Z-förmig) vorgesehen, das einen horizontalen Mittenabschnitt 35 aufweist, unterhalb dem die Antriebseinheit 13 angeordnet ist. Gleiche Bauteile im Vergleich zu der ersten Ausführungsform sind mit den gleichen Bezugszeichen versehen.

Im Unterschied zu dem vorhergehenden Ausführungsbeispiel weisen die erste Leuchteinheit 31 und die zweite Leuchteinheit 32 lediglich untenseitig bzw. o-benseitig Angriffspunkte 36 für die Stößelstange 16 bzw. die Blattfeder 17 auf.

In Übereinstimmung mit dem ersten Ausführungsbeispiel sind die vertikalen Verschwenkachsen 12, 12' in Lichtaustrittsrichtung 4 vor dem Tragteil 34 sowie die Anbindung der Antriebseinheit 13 an die erste Leuchteinheit 31 und die zweite Leuchteinheit 32 in Lichtaustrittsrichtung 4 hinter dem Tragteil 34 vorgesehen.

Alternativ kann die Stößelstange 16 auch endseitig mit einem Außengewinde versehen sein, so dass sie als Schnecke unmittelbar mit dem als bogenförmiges Zahnradelement ausgebildeten Fortsatz 18, 18' der ersten Leuchteinheit 2 bzw. der zweiten Leuchteinheit 3 in Eingriff steht.

## Patentansprüche

1. Scheinwerfer für Fahrzeuge mit in einer einem Gehäuse angeordneten ersten Leuchteinheit zur Erzeugung einer ersten Lichtfunktion und mit einer in dem Gehäuse angeordneten zweiten Leuchteinheit zur Erzeugung einer zweiten Lichtfunktion einerseits sowie zur Erzeugung einer Kurvenlichtfunktion andererseits, wobei die erste Leuchteinheit und die zweite Leuchteinheit an einem gemeinsamen Tragteil gehaltert sind, **dadurch gekennzeichnet, dass** das Tragteil (10, 34) drehfest mit dem Gehäuse verbunden ist und dass die erste Leuchteinheit (2, 31) und die zweite Leuchteinheit (3, 32) mittels einer gemeinsamen Antriebseinheit (13) um eine vertikale Verschwenkachse (12, 12') verschwenkbar sind zur Erzeugung jeweils eines Kurvenlichtbündels.

2. Scheinwerfer nach Anspruch 1, **dadurch gekennzeichnet, dass** die Antriebseinheit (13) einen Stellmotor (14) sowie eine Stößelstange (16) aufweist, die an einem Ende mit der ersten Leuchteinheit (2) und an einem gegenüberliegenden Ende derselben mit der zweiten Leuchteinheit (3) gekoppelt ist.

3. Scheinwerfer nach Anspruch 1 oder 2, **dadurch gekennzeichnet, dass** die erste Leuchteinheit (2, 31) und die zweite Leuchteinheit (3, 32) jeweils lediglich eine Lichtquelle (5, 7) und einen derselben zugeordneten Reflektor (6, 8) aufweisen.

4. Scheinwerfer nach einem der Ansprüche 1 bis 3, **dadurch gekennzeichnet, dass** die erste Leuchteinheit (2, 31) derart ausgebildet ist, dass ein Nahlichtbündel (21) abstrahlbar ist, und dass die zweite Leuchteinheit (3, 32) derart ausgebildet ist, dass ein Fernlichtbündel (22) abstrahlbar ist.

5. Scheinwerfer nach einem der Ansprüche 1 bis 4, **dadurch gekennzeichnet, dass** die zweite Leuchteinheit (3) in Richtung der Fahrzeuglängsachse (33) derart versetzt zu der ersten Leuchteinheit (2, 31) angeordnet ist, dass die zweite Leuchteinheit (3, 32) verzögert zu der ersten Leuchteinheit (2, 31) verschwenkt wird.

6. Scheinwerfer nach einem der Ansprüche 1 bis 5, **dadurch gekennzeichnet, dass** die Verschwenkachse (12, 12') der ersten Leuchteinheit (2 ,31) und der zweiten Leuchteinheit (3, 32) in Lichtaustrittsrichtung (4) vor einer Längsebene des Tragteils (10, 34) angeordnet ist.

7. Scheinwerfer nach einem der Ansprüche 1 bis 6, **dadurch gekennzeichnet, dass** die Antriebseinheit (13) in Lichtaustrittsrichtung (4) hinter oder unter oder über einer Längsebene des Tragteils (10, 34) angeordnet ist.

8. Scheinwerfer nach einem der Ansprüche 1 bis 7, **dadurch gekennzeichnet, dass** das Stellorgan (14) als ein Schrittmotor ausgebildet ist.

9. Scheinwerfer nach einem der Ansprüche 1 bis 8, **dadurch gekennzeichnet, dass** die Lichtquelle (5, 7) der ersten Leuchteinheit (2, 31) und/oder der zweiten Leuchteinheit (3, 32) als eine Halogenlampe oder als eine Gasentladungslampe ausgebildet ist.

10. Scheinwerfer nach einem der Ansprüche 1 bis 9, **dadurch gekennzeichnet, dass** das Tragteil (10, 34) als ein Halterahmen ausgebildet ist mit jeweils einer der ersten Leuchteinheit (2, 31) und der zweiten Leuchteinheit (3, 32) zugeordneten Öffnungen, in die jeweils der erste Reflektor (6) der ersten Leuchteinheit (2) und der zweite Reflektor (8) der zweiten Leuchteinheit (3) eintauchen.
